# EUROPEAN PATENT APPLICATION

(11) **EP 4 258 538 A1**
(43) Date of publication of application: **11.10.2023**
(21) Application number: 23162348.9
(22) Date of filing: 16.03.2023
(51) Int. Cl.: H02P 27/04

(54) **AIRCRAFT HIGH-VOLTAGE ACTUATOR CONTROLLER WITH EMBEDDED BIDIRECTIONAL DC/DC CONVERTER**

(30) Priority: 04.04.2022 US 202217657857
(71) Applicant: Honeywell International Inc., Charlotte, NC 28202 (US)
(72) Inventor: HOLY, Jiri, Charlotte, 28202 (US); HANUS, Petr, Charlotte, 28202 (US); KOTABA, Ondrej, Charlotte, 28202 (US); MANDEL, Ondrej, Charlotte, 28202 (US)
(74) Representative: LKGlobal UK Ltd.

(57) **Abstract**

An aircraft electromechanical actuator control system for an aircraft having a direct current (DC) voltage bus includes an actuator controller that is coupled to receive a first DC voltage from the aircraft DC voltage bus, where the first DC voltage has a first voltage magnitude. The actuator controller selectively supplies AC voltage to an electromechanical actuator and includes a bidirectional DC/DC converter, an inverter, and actuator control logic. The bidirectional DC/DC converter receives the first DC voltage and supplies a second DC voltage having a second voltage magnitude that is less than the first voltage magnitude. The inverter receives the second DC voltage converts it to the AC voltage. The actuator control logic receives actuator commands and supplies inverter control signals to the inverter.

## Description

### TECHNICAL FIELD

The present invention generally relates to aircraft actuation control, and more particularly relates to an aircraft high-voltage actuator controller that includes an embedded bidirectional DC/DC converter.

### BACKGROUND

Electromechanical actuators, which include an electric motor and a mechanical actuator, are used in myriad systems and environments. One specific system and environment is the flight control system on an aircraft. In particular, many modern aircraft flight control systems use electromechanical actuators to controllably move various flight control surfaces. In many instances, the electromechanical actuators are controllably energized from the aircraft high-voltage DC bus, which can be in the range of 440-900 VDC nominal, up to approximately 1000 VDC peak. This means that the electric motor within the actuator controllers must be rated for this relatively high voltage, making them non-standard, relatively heavy, and relatively costly.

The electromechanical actuators and associated controllers are, in many instances, exposed to the ambient pressure external to the pressurized aircraft cabin. Thus, the electric motors and the electronic circuitry within the controllers can experience corona and partial discharge in this relatively low-pressure environment. This is especially true for the AC domain of the actuator controller and the electromechanical actuator.

Hence, there is a need for an aircraft high-voltage actuator controller that does not experience corona and partial discharge in the AC domain of the controller and the electromechanical actuator that it is controlling. The present disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, an aircraft electromechanical actuator control system for an aircraft having a direct current (DC) voltage bus includes an actuator controller that is coupled to receive a first DC voltage from the aircraft DC voltage bus, where the first DC voltage has a first voltage magnitude. The actuator controller is further coupled to, and configured to selectively supply AC voltage to, an electromechanical actuator. The actuator controller includes a bidirectional DC/DC converter, an inverter, and actuator control logic. The bidirectional DC/DC converter is coupled to receive the first DC voltage and is configured to supply a second DC voltage having a second voltage magnitude that is less than the first voltage magnitude. The inverter is coupled to receive the second DC voltage from the bidirectional DC/DC converter and is configured, in response to inverter control signals, to convert the second DC voltage to the AC voltage and supply the AC voltage to the electromechanical actuator. The actuator control logic is coupled to receive actuator commands and is configured, in response to the actuator commands, to supply the inverter control signals to the inverter.

In another embodiment, an aircraft electromechanical actuator control system for an aircraft having a direct current (DC) voltage bus includes an actuator controller that is coupled to receive a first DC voltage from the aircraft DC voltage bus, where the first DC voltage has a first voltage magnitude. The actuator controller is further coupled to, and configured to selectively supply an AC voltage to, an electromechanical actuator. The actuator controller includes a bidirectional buck/boost DC/DC converter, an inverter, and actuator control logic. The bidirectional buck/boost DC/DC converter is coupled to receive the first DC voltage and is configured to supply a second DC voltage having a second voltage magnitude that is less than the first voltage magnitude. The inverter is coupled to receive the second DC voltage from the bidirectional buck/boost DC/DC converter and is configured, in response to inverter control signals, to convert the second DC voltage to the AC voltage and supply the AC voltage to the electromechanical actuator. The actuator control logic is coupled to receive actuator commands and is configured, in response to the actuator commands, to supply the inverter control signals to the inverter. The first voltage magnitude is ≥ 440 VDC and the second voltage magnitude is ≤ 400 VDC.

In yet another embodiment, an aircraft electromechanical actuator control system for an aircraft having a direct current (DC) voltage bus includes an electromechanical actuator and an actuator controller. The electromechanical actuator is mounted on the aircraft and is exposed to ambient pressure external to the aircraft. The electromechanical actuator includes an electric motor and an actuator that is coupled to the electric motor. The electric motor is coupled to receive an AC voltage and is operable, upon receipt of the AC voltage, to generate and supply a torque to the actuator. The actuator controller is mounted on the aircraft and is exposed to the ambient pressure external to the aircraft. The actuator controller is coupled to receive a first DC voltage from the aircraft DC voltage bus, where the first DC voltage has a first voltage magnitude. The actuator controller is further coupled to, and is configured to selectively supply the AC voltage to, the electromechanical actuator. The actuator controller includes a bidirectional DC/DC converter, an inverter, and actuator control logic. The bidirectional DC/DC converter is coupled to receive the first DC voltage and is configured to supply a second DC voltage having a second voltage magnitude that is less than the first voltage magnitude. The inverter is coupled to receive the second DC voltage from the bidirectional DC/DC converter and is configured, in response to inverter control signals, to convert the second DC voltage to the AC voltage and supply the AC voltage to the electric motor. The actuator control logic is coupled to receive actuator commands and is configured, in response to the actuator commands, to supply the inverter control signals to the inverter.

Furthermore, other desirable features and characteristics of the aircraft electromechanical actuator control system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a functional block diagram of one example embodiment of an aircraft electromechanical actuator control system; and
FIG. 2 depicts a schematic diagram of one example embodiment of an actuator controller that may be used in the aircraft electromechanical actuator control system of FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

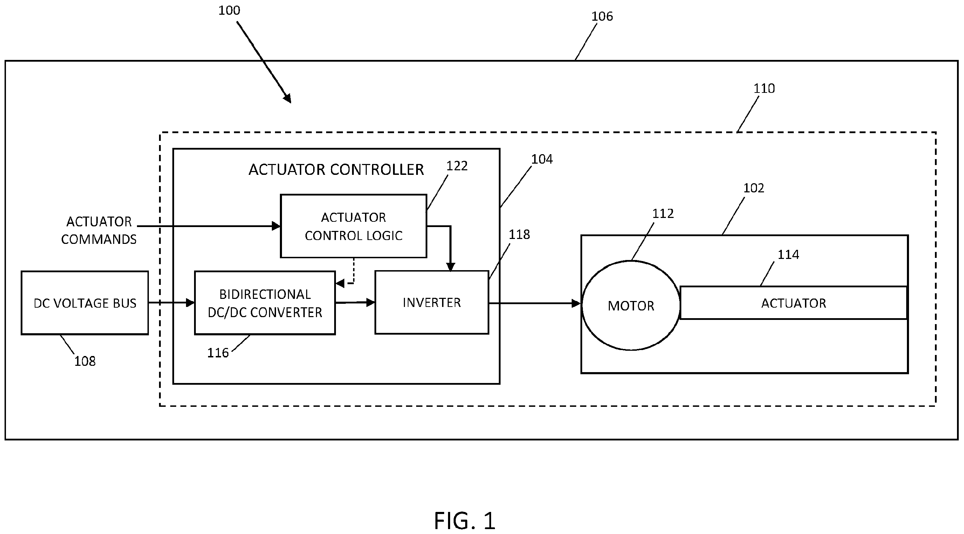

Referring to FIG. 1, a functional block diagram of one embodiment of an aircraft electromechanical actuator control system 100 is depicted and includes an electromechanical actuator 102 and an actuator controller 104. Before proceeding further, it is noted that, for ease of depiction and description, the system 100 depicted in FIG. 1 includes only one electromechanical actuator 102 and one actuator controller 104. It will be appreciated, however, that the system 100 may be implemented with multiple electromechanical actuators 102 and multiple actuator controllers 104. Moreover, the depicted actuator controller 104 could be coupled to, and configured to control, more than one electromechanical actuator 102. Additionally, at least in some embodiments, and as depicted using the dashed line in FIG. 1, the electromechanical actuator(s) 102 and actuator controller(s) 104 may be disposed within a common housing 110.

Returning to the description, it is further seen that the system 100 is mounted on an aircraft 106. In some embodiments, the electromechanical actuator 102 and an actuator controller 104 are both mounted to the aircraft 106 in a manner that each is exposed to ambient pressure external to the aircraft 106. As FIG. 1 also depicts, the aircraft 106 includes a direct current (DC) voltage bus 108. The DC voltage bus 108 supplies high DC voltage of a relatively high voltage magnitude to the actuator controller 104 and various other non-illustrated DC loads. Although the voltage magnitude may vary, in the depicted embodiment the voltage magnitude is greater than or equal to 440 VDC. For example, it may be in a range of 440 VDC to 900 VDC, just to name one example range of voltage magnitudes.

No matter the specific voltage magnitude of the DC voltage bus 108, the electromechanical actuator 102 includes an electric motor 112 and an actuator 114. The electric motor 112 is an AC motor and is coupled to receive an AC voltage. The motor 112 is operable, upon receipt of the AC voltage, to generate and supply a torque to the actuator 114. The motor 112 may be implemented using any one of numerous types of AC motors now known or developed in the future. Some non-limiting examples include any one of numerous types of induction motors and synchronous motors, just to name a few.

The actuator 114 is coupled to receive the torque supplied from the electric motor 112. The actuator is configured, upon receipt of the torque, to move a load (e.g., flight control surface). It will be appreciated that the actuator 114 may be implemented using any one of numerous types of actuation devices now known or developed in the future. Some non-limiting examples include a ball screw actuator, a roller screw actuator, an acme screw actuator, and a rotary gearbox actuator (including harmonic drives), just to name a few.

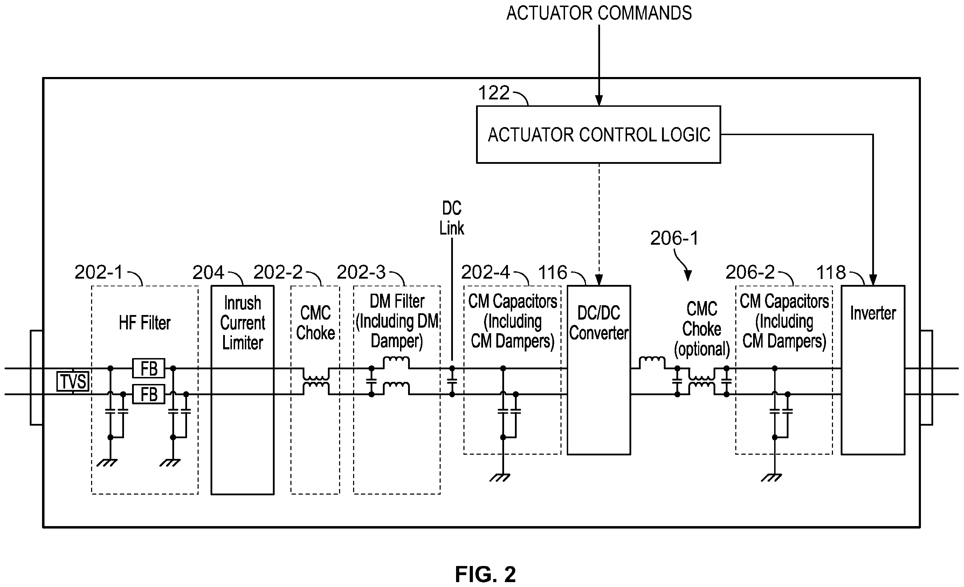

The actuator controller 104, an example embodiment of which is depicted in FIG. 2, is coupled to receive the DC voltage from the aircraft DC voltage bus 108 and is also coupled to the electromechanical actuator 102. The actuator controller 104 is configured to selectively supply the AC voltage to the electromechanical actuator 102. To do so, the actuator controller 104 includes at least a bidirectional DC/DC converter 116, an inverter 118, and actuator control logic 122. The bidirectional DC/DC converter 116 is coupled to receive the DC voltage from the DC voltage bus 108 (i.e., a first DC voltage having a first voltage magnitude). More specifically, at least in the example embodiment depicted in FIG. 2, the bidirectional DC/DC converter 116 receives the DC voltage from the DC voltage bus 108 via one or more input filters circuits 202 (four in the depicted embodiment: 202-1, 202-2, 202-3, 202-4) and an inrush current limiter circuit 204. The bidirectional DC/DC converter 116 is configured to supply a second DC voltage to the inverter 118. The second DC voltage has a second magnitude that is less than the voltage magnitude of the DC voltage bus 108. That is, the second voltage magnitude is less than the first voltage magnitude. Although the second voltage magnitude may vary, in the depicted embodiment the second voltage magnitude is less than or equal to 400 VDC. For example, the second voltage magnitude may be 400 VDC, 270 VDC, or 28 VDC, just to name a few examples of suitable voltage magnitudes.

It will be appreciated that the bidirectional DC/DC converter 116 may be implemented using any one of numerous types of bidirectional DC/DC converter topologies. In one particular embodiment, it is implemented using a bidirectional buck/boost converter topology. Regardless of the specific topology, however, the bidirectional DC/DC converter 116, as the name connotes, allows electrical energy to flow in both directions. Thus, when the electromechanical actuator 102 regenerates energy when, for example, it resists motion applied to the load it is connected to, such as a flight control surface, the bidirectional DC/DC converter 116 maintains the voltage at the inverter 118 by supplying the energy back to the DC voltage bus 108.

The inverter 118 is coupled to receive the second DC voltage from the bidirectional DC/DC converter 116 and is configured, in response to inverter control signals, to convert the second DC voltage to the AC voltage that is supplied to the electric motor 112. More specifically, at least in the example embodiment depicted in FIG. 2, the inverter 118 receives the second DC voltage via one or more output filter circuits 206 (two in the depicted embodiment: 206-1, 206-2). It will be appreciated that the inverter 118 may be implemented using any one of numerous types of inverter circuit topologies.

The actuator control logic 122 is coupled to receive actuator commands and is configured, in response to the actuator commands, to supply the inverter control signals to the inverter 118. The actuator control logic 122 may be implemented using any one of numerous known control logic schemes and may be implemented in a general-purpose processor, a digital signal processor (DSP), an application specific integrated circuit (ASIC), a field programmable gate array (FPGA) or other programmable logic device. The actuator commands supplied to the actuator control logic may be supplied from, for example, a pilot user interface in the aircraft cockpit, or from another system, such as an auto-flight or auto-pilot system installed in the aircraft 106.

As FIGS. 1 and 2 also depict, the actuator control logic 122 may also, in some embodiments, be further configured, in response to the actuator commands, to supply a voltage command signal (depicted using a dotted line) to the bidirectional DC/DC converter 116. The voltage command signal represents a desired voltage magnitude to be supplied by the bidirectional DC/DC converter 116. In such embodiments, the bidirectional DC/DC converter 116 is coupled to receive the voltage command signal and is further configured, in response to the voltage command signal, to set the second voltage magnitude equal to the desired voltage magnitude. With this embodiment, the power loss in the inverter 118 may be reduced. For example, when the electromechanical actuator 102 is commanded to move at a relatively slower rate, the bidirectional DC/DC converter 116 can supply a relatively a lower DC voltage, thereby reducing overall power loss.

The actuator controller 104 disclosed herein limits the challenges of corona and partial discharge to the DC/DC converter 116 and subsequently reduces these effects to the rest of the system 100. It is also less complex, lighter weight, and less costly, as compared to presently known aircraft high-voltage actuator controllers. It further allows using proven (corona-free) motors within the actuator, as well as the interconnect harnesses between the actuator controller 104 and the actuator 102.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An aircraft electromechanical actuator control system for an aircraft having a direct current (DC) voltage bus, the system comprising:
an actuator controller coupled to receive a first DC voltage from the aircraft DC voltage bus, the first DC voltage having a first voltage magnitude, the actuator controller further coupled to, and configured to selectively supply an AC voltage to, an electromechanical actuator, the actuator controller including:
a bidirectional DC/DC converter coupled to receive the first DC voltage and configured to supply a second DC voltage having a second voltage magnitude, the second voltage magnitude being less than the first voltage magnitude,
an inverter coupled to receive the second DC voltage from the bidirectional DC/DC converter and configured, in response to inverter control signals, to convert the second DC voltage to the AC voltage and supply the AC voltage to the electromechanical actuator, and
actuator control logic coupled to receive actuator commands and configured, in response to the actuator commands, to supply the inverter control signals to the inverter.

2. The system of claim 1, wherein:
the first voltage magnitude is ≥ 440 VDC; and
the second voltage magnitude is ≤ 400 VDC.

3. The system of any preceding claim, wherein the electromechanical actuator and actuator controller are mounted on the aircraft such that each is exposed to ambient pressure external to the aircraft.

4. The system of any preceding claim, wherein the bidirectional DC/DC converter is a bidirectional buck/boost converter.

5. The system of any preceding claim, further comprising:
the electromechanical actuator mounted on the aircraft and including an electric motor and an actuator that is coupled to the electric motor, the electric motor coupled to receive the AC voltage from the actuator controller and operable, upon receipt thereof, to generate and supply a torque to the actuator.

6. The system of claim 5, wherein the actuator controller and electromechanical actuator are disposed within a common housing.

7. The system of any preceding claim, wherein the actuator controller is mounted on the aircraft.

8. The system of any preceding claim, wherein:
the actuator control logic is further configured, in response to the actuator commands, to supply a voltage command signal that represents a desired voltage magnitude; and
the bidirectional DC/DC converter is coupled to receive the voltage command signal and is further configured, in response to the voltage command signal, to set the second voltage magnitude equal to the desired voltage magnitude.
